# EUROPÄISCHE PATENTSCHRIFT

(11) **EP 2 399 445 B1**
(45) Veröffentlichungstag und Bekanntmachung des Hinweises auf die Patenterteilung: **07.09.2016**
(21) Anmeldenummer: 11163152.9
(22) Anmeldetag: 20.04.2011
(51) Int. Cl.: A01D 41/14, A01D 34/14

(54) **Messerbalken**
Cutter bar
Barre porte-lame

(30) Priorität: 22.06.2010 DE 102010017502
(43) Veröffentlichungstag der Anmeldung: 28.12.2011
(73) Patentinhaber: CLAAS Selbstfahrende Erntemaschinen GmbH, 33428 Harsewinkel (DE)
(72) Erfinder: Bürmann, Dominik, 33415, Verl (DE); Liedmeier, Stefan, D-49479 Ibbenbürem (DE)

(56) Entgegenhaltungen:
- EP-A1- 1 021 944
- EP-A1- 1 762 133
- EP-A1- 2 022 313
- US-A- 3 683 601
- US-B1- 7 861 505

## Beschreibung

Die vorliegende Erfindung betrifft einen Messerbalken gemäß dem Oberbegriff des Anspruches 1.

Messerbalken für ein Schneidwerk weisen eine Messerschiene auf, an der ein quer zur Fahrtrichtung einer selbstfahrenden Erntemaschine oszillierend hin- und herbewegbares Schnittsystem befestigbar ist. Das Schnittsystem umfasst eine durch einen Antrieb hin- und herbewegbare Schiene, an der Mähmesser befestigt sind, sowie eine Messerschiene, an der die Mähmesser führende Messerfinger, die zudem als Gegenmesser fungieren, angeordnet sind. Um Bodenunebenheiten ausgleichen zu können, ist das Schnittsystem quer zu seiner Längsachse in vertikaler Richtung auslenkbar, was durch eine flexible Ausgestaltung des Mähbalkens erreicht wird. Die sich quer zur Fahrtrichtung erstreckende Messerschiene umfasst mindestens zwei an ihren einander zugewandten Stirnseiten miteinander verbindbare Teilschienen, die axial fluchtend angeordnet sind.

Ein solcher Messerbalken ist aus der EP 2 022 313 B1 bekannt. Der in der EP 2 022 313 B1 beschriebene Messerbalken umfasst einen ersten und einen zweiten Mähbalken, die als zwei axial fluchtend angeordnete Teilschienen ausgeführt sind, deren Stirnseiten aneinander stoßen und an denen Messerfinger befestigt sind. An den Teilschienen sind parallel zu diesen jeweils hin- und herbewegbare Balken ebenfalls zueinander fluchtend angeordnet, die Mähmesser tragen. Die Balken sind an ihren einander zugewandten Enden abschnittsweise überlappend ausgeführt, damit zwischen den daran angebrachten Mähmessern ein Bereich besteht, in dem diese sich überschneiden. Um die Bewegungsmöglichkeiten der Mähbalken sowie der hin- und herbewegbaren Balken bei einer vertikalen Auslenkung derselben in der Weise einzuschränken, dass diese sich nur in einer einzigen linearen Richtung bewegen können, ist eine Kopplungsvorrichtung vorgesehen, die an den Mähbalken beziehungsweise den hin- und herbewegbaren Balken befestigt ist. Die Kopplungsvorrichtung ist derart gestaltet, dass die Mähbalken im Bereich der Kopplungsvorrichtung eine koaxiale Position beibehalten, während die hin- und herbewegbaren Balken in einer koplanaren Position gehalten werden. Eine solche Kopplungsvorrichtung ist jedoch sehr aufwändig gestaltet.

Aus der EP 1 762 133 A1 ist ein Messerbalken für ein Schneidwerk gemäß dem Oberbegriff des Anspruches 1 bekannt. Die EP 1 762 133 A1 schlägt zur Formschlüssigen Verbindung zweier Messerbalkenteile eine Verriegelung vor, die aus einem Verriegelungsbolzen besteht, der von dem einem Messerteil getragen wird, und einer von dem anderen Messerbalkenteil getragenen Verriegelungshülse, in die der Verriegelungsbolzen einrastet. Der bauliche Aufwand für diese Verriegelung ist hoch und muss durch zusätzliche Mittel für die Betätigung der Verriegelung sowie das Halten in eingerastetem Zustand versehen werden.

Aufgabe der vorliegenden Erfindung ist es, einen Messerbalken der eingangs genannten Art bereitzustellen, dessen die Messerschiene bildenden Teilschienen mit geringem baulichen Aufwand in der Weise miteinander verbindbar sind, dass bei auftretenden Zugkräften, hervorgerufen durch eine Auslenkung des Schnittsystems in vertikaler Richtung, die Teilsschienen in ihrem Verbindungsbereich sicher in einer koaxialen Position gehalten.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass die Teilschienen der Messerschiene an ihren Stirnseiten formschlüssig miteinander verbunden sind. Die aus einer vertikalen Auslenkung des Schnittsystemes resultierenden Zugkräfte werden von der formschlüssigen Verbindung in der Weise aufgenommen, dass sich die Enden der Teilschienen nicht auseinander biegen oder gegeneinander verdrehen, wodurch die Koaxialität der Messerschiene verloren ginge. Des Weiteren sichert die formschlüssige Verbindung die fluchtende Anordnung der Teilschienen in ihrer Längsrichtung, was für ein zuverlässiges Zusammenspiel der an den Teilschienen mittels der hin- und herbewegbaren Schiene befestigten Mähmesser und den an den Teilschienen angeordneten, als Gegenmessern ausgeführten Messerfingern unerlässlich ist. Da die Messerschiene als Träger des Schnittsystems fungiert, ist es notwendig, dass sich die Teilschienen im montierten Zustand gegeneinander ausrichten, was durch die formschlüssige Verbindung der Teilschienen erreicht wird. Auf diese Weise wird das Auftreten eines Versatzes im Messerbalken, der die störungsfreie Bewegung des oszillierenden Schnittsystemes beeinträchtigen würde, vermieden. Formschlüssige Verbindungen ermöglichen darüber hinaus das einfache Verbinden zweier oder mehrerer Teilschienen zu einer Messerschiene, um den zunehmenden Anforderungen an eine gesteigerte Mähbreite gerecht zu werden. Zudem erlaubt die formschlüssige Verbindung in einfacher Weise den Austausch einer einzelnen Teilschiene falls dies erforderlich würde. In vorteilhafter Weise lässt sich die Messerschiene aufgrund der formschlüssigen Verbindung und der damit verbundenen Einfachheit des Zusammenbaus aus einer Mehrzahl von Teilschienen zusammensetzen, deren jeweilige Länge unterhalb von etwa drei Metern liegt. Die Verbindung von Teilschienen dieser Länge ist insbesondere für innerbetriebliche Abläufe bei der Bearbeitung von Vorteil, da diese einfacher zu händeln sind. Gleiches gilt auch für den Versand der Teilschienen als Ersatzteile, da der Versand der in der Länge beschränkten Teilschienen günstiger ist. Hierzu weisen die Teilschienen an ihren Stirnseiten einen Vorsprung beziehungsweise eine mit der Kontur des Vorsprunges korrespondiere Ausnehmung auf, wobei der Vorsprung und die Ausnehmung supplementäre Hinterschneidungen aufweisen, die Widerlager bilden. Die von den supplementären Hinterschneidungen gebildeten Widerlager begünstigen den Zusammenhalt der formschlüssigen Verbindung, sodass sich ein Auseinanderbiegen insbesondere im Bereich der den Vorsprung aufnehmenden Ausnehmung aufgrund der zu übertragenden Zugkräfte bei einer vertikalen Auslenkung vermieden werden kann.

Insbesondere können die Hinterschneidungen sich in Längsrichtung der Teilschienen verjüngend ausgeführt sein.

Dabei können sich die einander zugewandten Hinterschneidungen Neigungswinkel aufweisen, die sich zu einem Winkel von 180° ergänzen.

Hierzu kann der Vorsprung im Wesentlichen T-förmig ausgebildet sein.

In einer bevorzugten Weiterbildung können die einander zugewandten Hinterschneidungen Krümmungen aufweisen, die sich zu einem Winkel von 180° ergänzen.

Dabei kann der Vorsprung im Wesentlichen pilzförmig ausgebildet sein.

Die Erfindung wird nachstehend anhand eines in den Zeichnungen dargestellten Ausführungsbeispieles näher erläutert.

Es zeigen:
- Fig. 1: eine Detailansicht eines Schneidwerkes mit flexiblem Messerbalken;

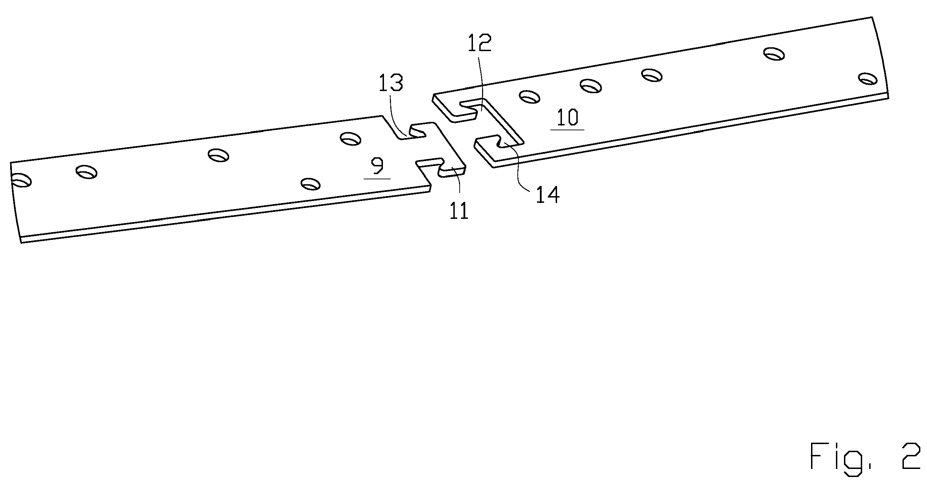

- Fig. 2: eine perspektivische Teilansicht zweier miteinander zu verbindender Endabschnitte von Teilschienen einer Messerschiene gemäß Fig. 1.

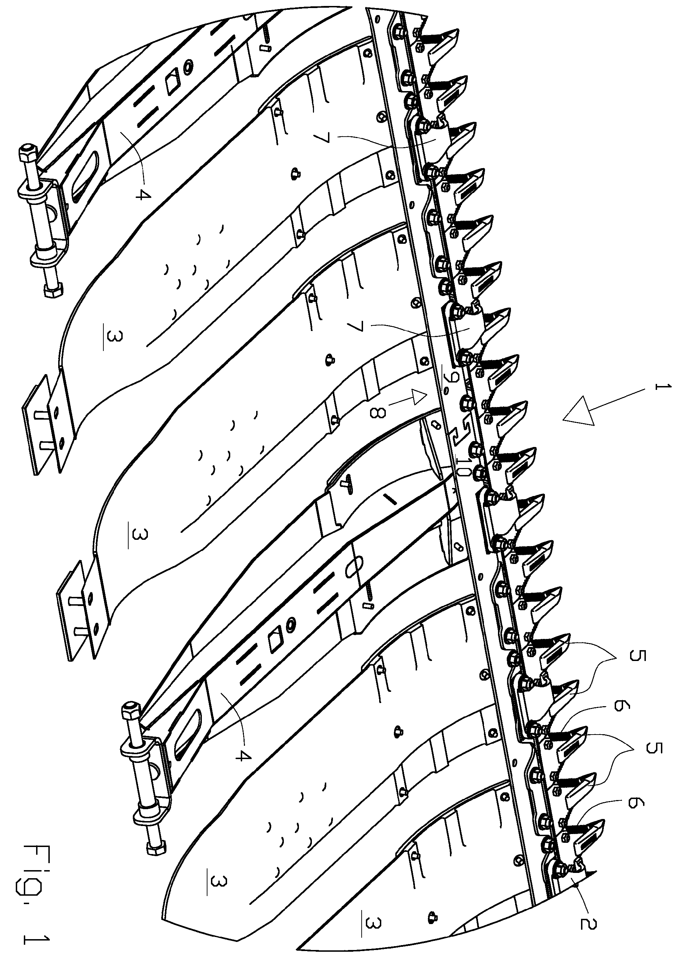

Zum Schnitt des Erntegutes ist an der Vorderseite eines in der Zeichnung nicht dargestellten Mähdreschers ein an und für sich bekanntes Schneidwerk angeordnet, dessen Detailansicht in Fig. 1 dargestellt ist. Das Schneidwerk umfasst im Wesentlichen eine Fördervorrichtung von geschnittenem Erntegut, einen flexiblen Mähbalken 1, an dem ein Schnittsystem 2 angeordnet ist, sowie eine Vielzahl nebeneinander angeordneter Gleitkufen 3. Die Gleitkufen 3 bestehen aus einem selbstfedernden und glattflächigen Kunststoff mit guten Gleitfähigkeitseigenschaften. Des Weiteren sind beabstandet zueinander etwa horizontal verlaufende, profilierte Bodenträger 4 am Schneidwerk vorgesehen. Die vorderen Enden der Gleitkufen 3 sind über Schraubverbindungen mit dem Mähbalken 1 verbunden. Das an dem Mähbalken 1 angeordnete Schnittsystem 2 umfasst Mähmesser 6, die an einer hinund herbewegbaren Schiene angeordnet sind, sowie Mähfinger 5, die als Gegenmesser ausgebildet sind. Das Schnittsystem 2 ist über eine Messerschiene 8 mit dem Schneidwerk verbunden. Das Schneidwerk ist sowohl für die Ernte von Getreide als auch von Bohnen oder anderen Erntegütern mit niedrig liegenden Fruchtständen geeignet. Während bei der Getreideernte das Schneidwerk in einem Abstand über dem Feldboden geführt wird und der Mähbalken 1 in einer geradlinigen Ebene die Halme schneidet, wird bei der Bohnenernte das Schneidwerk so weit abgesenkt, dass die Gleitkufen 4 über die gesamte Schneidwerksbreite einen Bodenkontakt aufweisen und der flexible Mähbalken 1 sich quer zur Fahrtrichtung elastisch federnd dem ständig wechselnden Bodenprofil anpasst, so dass in allen Bereichen des Mähbalkens 1 eine optimale, möglichst geringe Schnitthöhe erreicht wird.

Die Messerschiene 8 ist als mehrteiliges Flachprofil ausgeführt und umfasst mindestens zwei Teilschienen 9, 10 die axial zueinander fluchtend am Schneidwerk angeordnet sind. Die mindestens zwei Teilschienen 9, 10 sind hierzu an ihren einander gegenüberliegenden Stirnseiten formschlüssig miteinander verbindbar. ZU formschlüssigen Verbindung weisen die Teilschienen 9, 10 an ihren Stirnseiten einen Vorsprung 11 beziehungsweise eine mit der Kontur des Vorsprunges 11 korrespondierende Ausnehmung 12 auf, wobei der Vorsprung 11 und die Ausnehmung 12 supplementäre Hinterschneidungen 13, 14 aufweisen können, die Widerlager bilden. Dadurch wird erreicht, dass die auf die Teilschienen 9, 10 einwirkenden Zugkräfte, hervorgerufen durch die vertikale Auslenkung des flexiblen Mähbalkens 1 bei dessen Nachführung gegenüber einem sich ständig wechselnden Bodenprofil nicht dazu führen, dass sich die formschlüssig miteinander verbundenen Enden der Teilschienen auseinanderbiegen, sondern sich vielmehr zusammenziehen und auf diese Weise selbst stabilisieren und aneinander ausrichten.

Insbesondere sind die jeweiligen Hinterschneidungen 13, 14 zur Stirnseite der jeweiligen Teilschiene 9, 10 hin verjüngend ausgeführt, so dass sich der Vorsprung 11 und die Ausnehmung 12 in montiertem Zustand ineinander verhaken, also ein Widerlager bilden. Der Vorsprung 11 einer Teilschiene 9 ist vorzugsweise im Wesentlichen T-förmig ausgebildet, so dass die einander zugewandten Hinterschneidungen 13, 14 des Vorsprunges 9 und der mit der Kontur des Vorsprunges 9 korrespondierende Ausnehmung 10 Neigungswinkel aufweisen, die sich zu einem Winkel von 180°ergänzen.

Alternativ können die einander zugewandten Hinterschneidungen 13, 14 Krümmungen aufweisen, die sich zu einem Winkel von 180° ergänzen, wobei der Vorsprung 9, im Wesentlichen pilzförmig ausgebildet ist.

Zur Verbindung von mehr als zwei Teilschienen zu einer Messerschiene 8 ist vorgesehen, dass eine oder mehrere zwischen endseitigen Teilschienen angeordnete Mittelteilschienen an einem Enden stirnseitig mit einem Vorsprung sowie an dem gegenüberliegenden Ende mit einer Ausnehmung ausgeführt sind. Auf diese Weise lässt sich die Länge der Messerschiene 8 flexibel gestalten und in einfacher Weise an verschiedene Schneidwerksbreiten anpassen.

## Patentansprüche

1. Messerbalken (1) für ein Schneidwerk mit einer mindestens zwei an ihren Stirnseiten miteinander verbindbaren Teilschienen (9, 10) umfassenden Messerschiene (8) sowie einem an der Messerschiene (8) befestigbaren oszillierend hin- und herbewegbaren Schnittsystem (2), welches quer zu seiner Längsachse in vertikaler Richtung auslenkbar ist, wobei die Teilschienen (9, 10) an ihren einander zugewandten Stirnseiten formschlüssig miteinander verbindbar sind, **dadurch gekennzeichnet, dass**, die Teilschienen (9, 10) an ihren Stirnseiten einen Vorsprung_(11) beziehungsweise eine mit der Kontur des Vorsprunges (11) korrespondierende Ausnehmung (12) aufweisen, wobei der Vorsprung (11) und die Ausnehmung (12) supplementäre Hinterschneidungen (13, 14) aufweisen, die Widerlager bilden.

2. Mähbalken (1) nach Anspruch 2 1, **dadurch gekennzeichnet, dass** die Hinterschneidungen (13, 14) sich in Längsrichtung der Teilschienen (9, 10) verjüngend ausgeführt sind.

3. Mähbalken (1) nach einem der Ansprüche 1 oder 2, **dadurch gekennzeichnet, dass** sich die einander zugewandten Hinterschneidungen Neigungswinkel aufweisen, die sich zu einem Winkel von 180° ergänzen.

4. Mähbalken (1) nach Anspruch 3, **dadurch gekennzeichnet, dass** der Vorsprung (11) im Wesentlichen T-förmig ausgebildet ist.

5. Mähbalken (1) nach einem der Ansprüche 1 oder 2, **dadurch gekennzeichnet, dass** die einander zugewandten Hinterschneidungen Krümmungen aufweisen, die sich zu einem Winkel von 180° ergänzen.

6. Mähbalken (1) nach Anspruch 1 **dadurch gekennzeichnet, dass** der Vorsprung (11) im Wesentlichen pilzförmig ausgebildet ist.

## Claims

1. A cutter bar (1) for a cutting mechanism comprising a blade rail (8) which includes at least two rail portions (9, 10) which can be connected together at their ends, and a cutting system (2) which can be fixed to the blade rail (8) and which is oscillatingly reciprocable and which can be deflected transversely relative to its longitudinal axis in a vertical direction, wherein the rail portions (9, 10) can be connected together in positively locking relationship at their mutually facing ends, **characterised in that** at their ends the rail portions (9, 10) respectively have a projection (11) and a recess (12) corresponding to the contour of the projection (11), wherein the projection (11) and the recess (12) have supplementary undercut configurations (13, 14) which form support means.

2. A mowing bar (1) according to claim 1 **characterised in that** the undercut configurations (13, 14) are of a narrowing configuration in the longitudinal direction of the rail portions (9, 10).

3. A mowing bar (1) according to one of claims 1 and 2 **characterised in that** the mutually facing undercut configurations have angles of inclination which supplement each other to afford an angle of 180°.

4. A mowing bar (1) according to claim 3 **characterised in that** the projection (11) is substantially T-shaped.

5. A mowing bar (1) according to one of claims 1 and 2 **characterised in that** the mutually facing undercut configurations have curvatures which supplement each other to afford an angle of 180°.

6. A mowing bar (1) according to claim 1 **characterised in that** the projection (11) is of a substantially mushroom-shaped configuration.

## Revendications

1. Barre de coupe (1) pour un tablier de coupe comportant un rail de barre de coupe (8) comprenant au moins deux rails partiels (9, 10) pouvant être reliés ensemble à leurs faces frontales ainsi qu'un système de coupe (2) qui peut être fixé au rail de barre de coupe (8) et effectuer un mouvement oscillant de va-et-vient et qui peut être dévié dans une direction verticale transversalement à son axe longitudinal, les rails partiels (9, 10) pouvant être reliés ensemble par complémentarité de forme au niveau de leurs faces frontales tournées l'une vers l'autre, **caractérisée en ce que** les rails partiels (9, 10) présentent à leurs faces frontales une saillie (11), respectivement un évidement (12) correspondant au contour de la saillie (11), la saillie (11) et l'évidement (12) présentant des contre-dépouilles supplémentaires (13, 14) qui forment des butées.

2. Barre de coupe (1) selon la revendication 1, **caractérisée en ce que** les contre-dépouilles (13, 14) sont réalisées de façon à se rétrécir dans la direction longitudinale des rails partiels (9, 10).

3. Barre de coupe (1) selon l'une des revendications 1 ou 2, **caractérisée en ce que** les contre-dépouilles tournées l'une vers l'autre présentent des angles d'inclinaison qui se complètent pour former un angle de 180°.

4. Barre de coupe (1) selon la revendication 3, **caractérisée en ce que** la saillie (11) est réalisée sensiblement en forme de T.

5. Barre de coupe (1) selon l'une des revendications 1 ou 2, **caractérisée en ce que** les contre-dépouilles tournées l'une vers l'autre présentent des courbures qui se complètent pour former un angle de 180°.

6. Barre de coupe (1) selon la revendication 1, **caractérisée en ce que** la saillie (11) est réalisée sensiblement en forme de champignon.
